# EUROPÄISCHE PATENTSCHRIFT

(11) **EP 0 497 101 B1**
(45) Veröffentlichungstag und Bekanntmachung des Hinweises auf die Patenterteilung: **06.09.1995**
(21) Anmeldenummer: 92100251.5
(22) Anmeldetag: 09.01.1992
(51) Int. Cl.: C08J 5/04, C08L 57/04, B29C 70/00

(54) **Formkörper auf Basis von Fasern**
Fibre-based moulding compound
Matière à mouler à base de fibres

(30) Priorität: 26.01.1991 DE 4102345
(43) Veröffentlichungstag der Anmeldung: 05.08.1992
(73) Patentinhaber: BASF Aktiengesellschaft, 67063 Ludwigshafen (DE)
(72) Erfinder: Dotzauer, Bernhard, Dr., W-6701 Maxdorf (DE); Schwartz, Manfred, Dr., W-6700 Ludwigshafen (DE); Beckerle, Wilhelm Friedrich, W-6712 Bobenheim-Roxheim (DE); Filges, Ulrich, Dr., W-6703 Limburgerhof (DE)

(56) Entgegenhaltungen:
- EP-A- 0 241 127

## Beschreibung

Die Erfindung betrifft Formkörper auf Basis von Fasern (Komponente A), ausgenommen Textilmaterialien, enthaltend
B) 5 bis 25 Gew.%, bezogen auf A, eines Polymerisates aus
   b₁) 75 bis 99,9 Gew.%, bezogen auf B, vinylaromatischen Monomeren, Methylmethacrylat, Methylacrylat, Acrylnitril, Methacrylnitril, Vinylhalogenid, Acrylestern und Methacrylestern von 2 bis 12 C-Atome enthaltenden Alkoholen und/oder Vinylestern mit bis zu 20 C-Atomen, wobei die Summe gebildet aus den Acryl- und Methacrylestern von 2 bis 12 C-Atome enthaltenden Alkoholen und den Vinylestern bis zu 20 Gew.-%, bezogen auf B, betragen kann,
   b₂) 0,1 bis 25 Gew.%, bezogen auf B, wenigstens eines Monomeren der allgemeinen Formel I 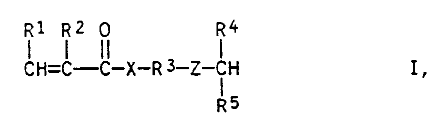 in der
      - R¹ und R²: -H oder C₁-C₄-Alkyl,
      - R³: ein Brückenglied mit 1 bis 20 C-Atomen,
      - R⁴: -C(O)R⁶, -C(O)OR⁶ oder -CN
      - R⁵: -H, -C(O)R⁹, -C(O)OR⁹ oder -CN
      - X: -O- oder -NR⁷-,
      - Z: eine einfache Bindung, -CH₂-, -O-, -NR⁸- oder -O-C(O)- und
      - R⁶,R⁷,R⁸ und R⁹: -H, Alkyl, Aryl, Alkaryl oder Aralkyl mit bis zu 12 C-Atomen sind,
   und
   b₃) 0 bis 10 Gew.%, bezogen auf B, weiteren copolymerisierbaren Monomeren, ausgenommen Itaconsäure.

Formkörper auf Basis von Mineralfasern sind an sich bekannt. So wird in den DE-A 29 24 085, US-A 4 187 142 und US-A 4 189 345 ein Verfahren zur Herstellung von Faserplatten beschrieben, bei dem die Zuschlagstoffe zusammen mit dem - gegebenenfalls ausgefällten - Bindemittel auf einem Langsieb abfiltriert werden (sog. Blattbildung) und die Faserplatten anschließend bei erhöhter Temperatur getrocknet werden.

Auf diese Weise stellt man beispielsweise aus Kaolin, Mineralfasern und Stärken Deckenplatten her. Der gravierende Nachteil solcher an sich sehr steifen Platten ist, daß sie in feuchten, besonders aber in feuchtwarmen Räumen - also unter tropischem Klima - ihre Form verlieren, d.h. sich unter ihrem Eigengewicht durchbiegen. Der optische Eindruck solcher durchbogener Decken ist häßlich und daher unerwünscht. Ein weiterer Nachteil ist die Empfindlichkeit solcher Flächengebilde gegenüber dem Abbau des Bindemittels Stärke durch Mikroorganismen, was durch dunkle Flecken und den Verlust der mechanischen Festigkeit zum Ausdruck kommt. Natürlich kann man solche Platten mit Microciden ausrüsten wie z.B. mit Formaldehyd-Depotstoffen. Diese gewährleisten durch allmähliche Abgabe von Formaldehyd einen Schutz gegen den Befall. Um aber einen langjährigen Schutz zu gewährleisten, muß man höhere Konservierungsmitteldosierungen wählen, die zu Geruchsbelästigungen und unter Umständen zu allergischen Reaktionen der Bewohner führen können.

Aus EP-A 367 023 sind Faserplatten bekannt, die Acrylatcopolymerisate enthalten. Diese können als wäßrige Lösung eingesetzt werden. Beim Einsatz dieser Bindersysteme in der Praxis hat sich jedoch gezeigt, daß einige Punkte noch verbesserungsfähig sind. So zeigt sich bei der Herstellung von Mineralfaserplatten auf dem Langsieb, daß die Viskosität der Polymerlösungen für übliche betriebliche Maßnahmen, wie z.B. Fördern und Dosieren, zu hoch ist. Die Viskosität von solchen ca. 10 %igen Polymerlösungen liegt bei etwa 25 Pas. Erst Lösungen mit Feststoffgehalten von deutlich unter 10 Gew.% können auf fast allen Anlagen problemlos eingesetzt werden, was durch die hohe Menge des Verdünnungsmittels Wasser unwirtschaftlich ist. Weiterhin neigen solche Polymerisate während der Trocknung der Rohplatten zum Migrieren, d.h. zu einer Bindemittelverarmung im Inneren der Mineralfaserplatten, was sich negativ auf die Weiterverarbeitung der Rohplatten auswirken kann. Dieser Bindemittelmigration weiß der Fachmann zwar durch den Einsatz von Stoffen mit inverser Löslichkeit, wie z.B. Polyvinylmethylether, zu begegnen. Sie verursachen aber zusätzliche Kosten und können die Feuchtigkeitsaufnahme der Endprodukte steigern.

Aus der EP-A 386 579 sind Formkörper bekannt, die mit Acrylatdispersionen gebunden werden. Die mit diesen Bindemitteln und denen der EP-A 367 023 hergestellten Formteile haben insgesamt befriedigende Eigenschaften, ihre mechanische Festigkeit und ihre Wasseraufnahme können jedoch noch verbessert werden. Eine Erhöhung der Wasserfestigkeit könnte mit einer höheren Dosierung von Hydrophobierungsmitteln geschehen, dabei muß man jedoch einen Rückgang der mechanischen Festigkeit sowie Benetzungs- und Verklebungsprobleme bei den Formteilen in Kauf nehmen.

Aus DE-A 23 46 310 sind glasfaserverstärkte Polyamide bekannt. Als Schlichte werden ca. 1 Gew.% eines Copolymerisates eingesetzt, das zum überwiegenden Teil aus Butylacrylat mit geringen Mengen an Butandiolmono-acrylat-acetylacetat besteht. Man erhält so eine thermoplastische Formmasse mit hoher Schlagzähigkeit. Ein Hinweis auf Faserplatten findet sich nicht. Werden solche Polymerisate jedoch trotzdem zur Herstellung von Faserplatten verwendet, so erhält man unerwünscht hohe Raumgewichte bei annehmbarer Stabilität und eine für Akustikplatten unbefriedigenden Prägbarkeit.

Gemäß EP-A 241 127 können Textilmaterialien mit wäßrigen Polymerdispersionen gebunden werden. Es handelt sich dabei um Copolymerisate, die als Hauptkomponente Ethylacrylat und Butylacrylat mit geringen Anteilen an beispielsweise Acetylacetoxyethylacrylat enthalten. Ein wesentliches Ziel ist es, Textilien mit hoher Flexibilität zu erhalten. Daher wurde der Fachmann davon abgehalten, Polymerisate der offenbarten Art zur Herstellung von steifen Faserplatten oder Faserformkörpern in Betracht zu ziehen.

Aufgabe der vorliegenden Erfindung war es, Formkörper auf Basis von Fasern bereitzustellen, die die oben geschilderten Nachteile vermeiden und eine geringe Wasseraufnahme mit hoher Steifigkeit kombinieren.

Demgemäß wurden die eingangs definierten Formkörper und ein Verfahren zu ihrer Herstellung gefunden. Bevorzugte Ausführungsformen sind den Unteransprüchen zu entnehmen.

Als Fasern kommen Mineralfasern in Betracht, z.B. Steinwolle, Basaltwolle, Schlackenwolle und Glasfasern mit Faserlängen von meist 0,2 bis 5, insbesondere 0,5 bis 2,5 cm und Dicken von etwa 1,7 bis 3,3 dtex. Auch organische Fasern kommen in Betracht. Dazu zählen in erster Linie Holzfasern wie zerkleinertes und/oder aufgeschlossenes Holz wie Kiefernholz. Solche Holzfasern werden üblicherweise aus Holzspänen, Hackschnitzeln oder Sägespänen hergestellt (z.B. Ullmann's Encyklopädie der technischen Chemie, 4. Aufl., Bd. 12, S. 720ff). Den Holzfasern können in untergeordneten Mengen auch andere organische Fasern wie Cellulosefasern oder Fasern von synthetischen Polymerisaten wie Polypropylenfasern und/oder Polyacrylnitrilfasern im allgemeinen in Mengen von 5 bis 60, bevorzugt 15 bis 40 und insbesondere 15 bis 25 Gew.%, bezogen auf Holzfasern, zugesetzt sein. Diese Fasern haben üblicherweise eine Länge von 0,3 bis 1,5 cm und eine Dicke von 10 bis 30 dtex.

Das Polymerisat B wird in Mengen von 5 bis 25, bevorzugt 5 bis 15 Gew.%, bezogen auf die Fasern A, eingesetzt. Es ist bevorzugt aus 75 bis 96 Gew.% b₁, 2 bis 20 Gew.% b₂, und 0 bis 20 Gew.% b₃ aufgebaut.

Als vinylaromatische Monomere kommen solche mit bis zu 20 C-Atomen, vorzugsweise Vinyltoluol, α- und para-Methylstyrol, α-Butylstyrol, 4-n-Butylstyrol, 4-n-Decylstyrol und vorzugsweise Styrol in Betracht. Die Vinylhalogenide sind mit Chlor, Fluor oder Brom substituierte ethylenisch ungesättigte Verbindungen, bevorzugt Vinylchlorid und Vinylidenchlorid.

Als Monomere b₁ kommen weiterhin Ester der Acryl- oder Methacrylsäure von 2 bis 12 C-Atome enthaltenden Alkoholen, bevorzugt Alkanolen in Frage. Als Alkohole seien genannt Methanol, Ethanol, n- oder i-Propanol, n-, s- und t-Butanol, n-Pentanol, Isoamylalkohol, n-Hexanol, Cyclohexanol, Octanol, 2-Ethylhexanol, Laurylalkohol, Benzylalkohol und Vinylethanol.

Als Ester der Acryl- und Methacrylsäure seien genannt Hexyl(meth)acrylat, Lauryl(meth)acrylat, Cyclohexylacrylat, Phenylethylmethacrylat, Methylacrylat, Ethylacrylat und n- , s- und t-Butyl(meth)acrylat, Benzylmethacrylat, Cyclohexylmethacrylat, Methylmethacrylat, Ethylmethacrylat und vor allem 2-Ethylhexylacrylat und n-Butylacrylat.

Vinylester mit bis zu 20 C-Atomen sind beispielsweise Vinylacetat, Vinylpropionat, Vinyllaurat und Vinylstearat.

In der allgemeinen Formel I von b₂ sind die folgenden Substituenten bevorzugt:
- R¹:: H,
- R²:: H oder Methyl,
- R³:: ein aliphatisches oder aromatisches Brückenglied wie -CH₂-, -C₂H₄-, -C₄H₈- und daneben auch -C₃H₆- oder -C₈H₁₆-,
- R⁴:: -C(O)R⁶ wie Acetyl, Benzoyl oder -CN
- R⁵:: -H, -C(O)R⁹ wie Benzoyl und Acetyl,
- X: -O- oder -NH-,
- Z:: -OC(O)- oder eine einfache Bindung,
- R⁶:: Methyl, Ethyl und Phenyl und
- R⁹:: Methyl, Ethyl und Phenyl.

Bevorzugt seien genannt Acetylacetoxyethylacrylat und -methacrylat 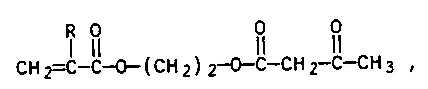
Acetylacetoxybutylacrylat und -methacrylat 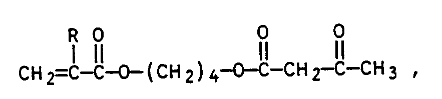
Cyanoacetoxyethylmethacrylat und Cyanoacetoxyethylarylat 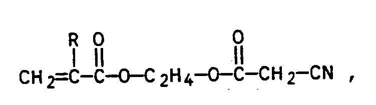
wobei R jeweils H oder CH₃ bedeutet.

Solche Verbindungen sind an sich bekannt aus DE-A 17 93 660, US-A 4 088 499 oder EP-A 241 127 und in üblicher Weiser herstellbar durch Umsetzung eines Hydroxyalkylesters, z.B. des Hydroxyethylesters der Acryl- oder Methacrylsäure mit Diketen oder Cyanoacetylchlorid.

Gute Ergebnisse werden auch mit 1,1-Dibenzoyl-2-methacrylamidoethan, 1,1-Dibenzoyl-2-acrylamidoethan, 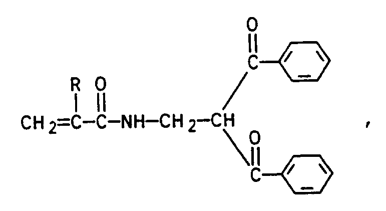
1-Benzoyl-1-acetyl-2-methacrylamidoethan und 1-Benzoyl-1-acetyl-2-acrylamidoethan 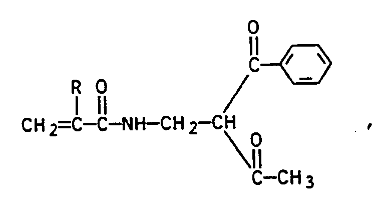
wobei R H oder CH₃ ist, erzielt.

Solche Verbindungen sind an sich bekannt aus DE-A 38 19 455 und in üblicher Weise herstellbar durch Amidomethylierung von 1,3-Diketonen in Gegenwart starker Säuren.

b₃ sind beispielsweise Acrylsäure, Methacrylsäure, Acrylamid, Methacrylamid, Maleinsäure, Fumarsäure, Maleinsäureanhydrid, Butandiolmonoacrylat, Glycidylmethacrylat oder auch zweifach ungesättigte Monomere wie Divinylbenzol, Butandioldiacrylat, Diallylphthalat, Butadien oder Chloropren. Bevorzugt wird Acrylsäure und Methacrylsäure, die meist in Mengen zwischen 1 und 8 Gew.%, bezogen auf B, eingesetzt wird.

Gute Erfolge werden mit Polymerisaten aus
b₁) einem Gemisch aus 55 bis 90 Gew.%, bezogen auf B, eines vinylaromatischen Monomeren, 2 bis 25 Gew.%, bezogen auf B, eines oder mehrerer Monomerer ausgewählt aus Methylacrylat, Acrylnitril, Methacrylnitril und 0 bis 20, bevorzugt 5 bis 20 Gew.%, bezogen auf B, Acrylester und/oder Methacrylester von 2 bis 12 C-Atome enthaltenden Alkoholen,
b₂) 2 bis 15 Gew.%, bezogen auf B, eines Monomeren der allgemeinen Formel I,
und
b₃) 0 bis 10 Gew.% weiterer copolymerisierbarer Monomerer, ausgenommen Itaconsäure,
und mit Polymerisaten aus
b₁) einem Gemisch aus 55 bis 96, bevorzugt bis 95 Gew.%, bezogen auf B, Methylmethacrylat, 0 bis 35 Gew.% mindestens eines Monomeren ausgewählt aus Methylacrylat, Acrylnitril, Methacrylnitril und 0 bis 20, bevorzugt 1 bis 20 Gew.%, bezogen auf B, Acrylester und/oder Methacrylester von 2 bis 12 C-Atome enthaltenden Alkoholen,
b₂) 4 bis 20 Gew.% eines Monomeren der allgemeinen Formel I,
und
b₃) 0 bis 10, bevorzugt 0 Gew.%, bezogen auf B, weiterer copolymerisierbarer Monomerer, ausgenommen Itaconsäure,
erzielt.

Das Polymerisat B wird vorzugsweise durch radikalische Emulsionspolymerisation in wäßriger Phase hergestellt.

Batchverfahren oder Zulaufverfahren, in denen der Initiator und/oder die gegebenenfalls in Wasser emulgierten Monomeren während der Polymerisation portionsweise oder kontinuierlich zugegeben werden, können benutzt werden (siehe beispielsweise Encyclopaedia of Polymer Science and Engineering, Vol. 6 (1986) 1 bis 52). Die entstehenden wäßrigen Copolymerdispersionen haben meist eine Konzentration an Copolymer, d.h. einen Feststoffgehalt von 40 bis 60, in vielen Fällen 45 bis 55 Gew.%. Als Emulgiermittel werden meist 0,2 bis 3 Gew.-%, bezogen auf die eingesetzten Monomeren, anionische und/oder nichtionische Emulgatoren, beispielsweise Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäuren, Fettsäuren, Fettalkohole, Fettamide und Alkylphenole, deren ethoxylierte und/oder sulfatierte Derivate, ferner Natriumsalze von Fettsäuren, wie Natriumstearat und Natriumoleat und sulfonierte Alkyldiphenylether verwendet.

Die pH-Werte der Polymerdispersionen liegen im Bereich von 3 bis 9, bevorzugt 4 bis 8,5. Die Polymerdispersionen sind meist niedrig-viskos, d.h. etwa 10 bis 20 mPa·s bei 23°C und einem Schergefälle von 280 s⁻¹. Die mittlere Teilchengröße liegt im Bereich von 100 bis 300, bevorzugt 100 bis 200 µm (D₅₀-Wert, Ultrazentrifuge, W. Maechtle, Makromolekulare Chemie 185 (1984), 1025).

Gute Erfolge werden erzielt, wenn das Polymerisat B eine Glasübergangstemperatur von 60 bis 150, bevorzugt 70 bis 100 und insbesondere 70 bis 95°C aufweist.

Vorteilhaft für die Verarbeitung ist der niedrige Restmonomerengehalt der erfindungsgemäß eingesetzten Polymerisate, der meist deutlich unter 500 ppm, bezogen auf Dispersion, liegt. Dies bedeutet, daß die Arbeitsstoffkonzentration in der Luft am Arbeitsplatz außerordentlich niedrig ist und daß die Fertigartikel praktisch geruchsfrei sind.

Die Polymerisatdispersionen sind stabil gegenüber Scherkräften und können problemlos transportiert und mit geeigneten Pumpen gefördert werden. Trotzdem besitzen sie ein sehr günstiges Fällungsverhalten. Sie koagulieren mit dem in Mineralfaserwerken anzutreffenden Kreislauf- oder Prozeßwasser ohne weitere Zusätze, so daß vorteilhafterweise auf den Zusatz von Fällungsmitteln wie z.B. Aluminiumsulfat verzichtet werden kann. Bei der Herstellung von Holzformteilen kann es manchmal jedoch von Vorteil sein, die Koagulation der Polymerdispersionen durch kleine Dosen z.B. verdünnter wäßriger Aluminiumsulfatlösungen zu unterstützen.

Die erfindungsgemäßen Formkörper können neben den Bestandteilen A und B nichtfaserige Füllstoffe C enthalten. Es kann sich dabei um feuergetrocknete Sande, feinteilige Tone wie Kaolin oder Montmorrilonit, Feldspat, Kreide, Kieselgur und Glimmer handeln, die bevorzugt mit den Mineralfasern eingesetzt werden. Ihre Menge kann zwischen 20 und 80, vorzugsweise 30 und 60 Gew.%, bezogen auf die eingesetzten Fasern, betragen.

Zusätzlich können die Formkörper noch bis zu 10, vorzugsweise 1 bis 3 Gew.%, bezogen auf Fasern, übliche Brandschutzmittel wie Aluminiumsilikat, -hydroxid, Borate wie Natriumtetraborat und/oder Phosphate wie prim. Natriumphosphat enthalten.

Manchmal fügt man bei der Herstellung der Formkörper noch bis zu 5, vorzugsweise 1 bis 2 Gew.%, bezogen auf die Fasern, an üblichen Hydrophobierungsmitteln wie Silikone und/oder Wachse zu.

Weiterhin können noch Stärke wie Maisstärke oder Kartoffelstärke meist in Mengen von 1 bis 5 Gew.%, bezogen auf die Fasern, zugesetzt werden.

Auch bekannte Flockungshilfsmittel wie Polyacrylamide können in geringen Mengen vorhanden sein.

Die Formkörper können in verschiedenen Verfahren hergestellt werden.

Man kann beispielsweise aus den Fasern A, gegebenenfalls den Füllstoffen C und weiteren Zuschlägen unter Durchmischen eine wäßrige Suspension herstellen. Dabei oder danach wird das Polymerisat B vorteilhafterweise als wäßrige Dispersion zugesetzt. Man arbeitet im allgemeinen bei Raumtemperatur, also zwischen 15 und 35°C. Anschließend wird die Suspension im allgemeinen durch Zugabe von Flockungshilfsmitteln ausgeflockt. Die entstehende Mischung wird in eine Form gegeben und entwässert, was z.B. durch Absaugen und/oder Pressen geschehen kann. Der noch nasse Formkörper wird üblicherweise im Verlauf von 0,1 bis 5 Stunden bei 100 bis 250°C getrocknet. Dabei können Trockenschränke, Umlufttrockner, IR-Strahler oder Mikrowellenstrahler und/oder beheizbare Pressen verwendet werden.

Auch andere Herstellungsvarianten sind möglich. Man kann beispielsweise bei der Herstellung von Flächengebilden die Blattbildung auf dem Langsieb vornehmen und bei erhöhter Temperatur (ca. 70 bis 150°C) trocknen. Es ist auch möglich, nach der Blattbildung einen Verformungsprozeß vorzunehmen und erst dann bei ernöhter Temperatur zu trocknen. Weiterhin können alle Zuschlagstoffe im trocknen oder feuchten Zustand vermischt werden, was in einem Wirbelbett geschehen kann. Danach wird verformt und vorzugsweise in der Wärme getrocknet.

Andere, in der Praxis vielfach bewährte Herstellungsverfahren sind das Befeuchten der Fasern und gegebenenfalls weiterer Zuschlagstoffe durch Besprühen oder Tauchen mit nachfolgendem Abquetschen und anschließender Trocknung bei erhöhter Temperatur, wobei man durch mehr oder weniger starkes Pressen während der Trocknung die Raumgewichte solcher Flächengebilde einstellen kann.

Weiterhin kann man zunächst aus Fasern und gegebenenfalls Fäll- und Zuschlagstoffen einen Formkörper bilden, der dann anschließend mit der wäßrigen Dispersion des Polymerisates B imprägniert wird. Dieses Verfahren ist in der EP-A 386 579 beschrieben.

Dabei werden die Formgrundkörper in vorteilhafter Weise zunächst mit der wäßrigen Dispersion imprägniert, wobei eine allseitige Imprägnierung bevorzugt wird, und nach anschließendem Trocknen mit der pigmentierten Dispersion als Dekor beschichtet.

Um optisch ansprechende Beschichtungen zu erhalten, ist es dabei von Vorteil, die Gesamtbeschichtung in mehreren Arbeitsgängen durchzuführen und zwischen den einzelnen Arbeitsgängen die jeweils aufgetragene Schicht zu trocknen, wobei in der Regel Temperaturen von 100 bis 180°C angewendet werden. Das Verfahren kann mit besonderem Vorteil zur Herstellung von Schalldämmplatten mit in Gegenwart von Luftfeuchtigkeit verbesserter Formbeständigkeit eingesetzt werden, wobei die flächigen Formgrundkörper gegebenenfalls mit schallabsorbierenden Strukturen versehen sein können. Das Auftragen der erfindungsgemäßen Massen kann durch Sprühen, Rollen oder Gießen erfolgen, wobei die Oberfläche des Formgrundkörpers in der Regel zuvor abgeschliffen wird. Die aufgetragenen Mengen betragen im allgemeinen (gerechnet in Mengen M des in der Beschichtungs- oder Imprägnierungsmasse enthaltenen wasserfreien Copolymerisats) 2 bis 100 g/m².

Bei den erfindungsgemäßen im allgemeinen betonfreien Formkörpern handelt es sich insbesondere um Platten, d.h. quaderförmige Körper mit üblicherweise einem Verhältnis von Breite:Länge von 1:1 bis 1:5 und Höhe:Länge von 1:10 bis 1:100.

Beispiele sind Mineralfaserplatten oder Holzfaserplatten, die als Deckenplatten oder Schalldämmplatten verwendet werden können. Die Platten können auf ihrer Sichtfläche mit bekannten schallabsorbierenden Strukturen und in an sich bekannter Weise mit Dekorbeschichtungen versehen sein. Die auf diese Weise erhaltenen Schalldämm(decken)-Platten haben sehr gutes Dämmverhalten, sind sehr steif - auch in feuchtem Zustand - und geben die aufgenommene Feuchte sehr leicht wieder ab.

Überraschenderweise werden bei den erfindungsgemäßen Formkörpern die vorstehend aufgezeigten Nachteile vermieden. Obwohl es sich bei den Polymerisaten B um Thermoplaste handelt, erfüllen sie als Bestandteile der Formkörper alle Bindefunktionen der Duroplaste wie z.B. Steifigkeit. Überraschend ist ferner, daß diese hydrophilen Polymeren die Steifigkeit der Formkörper auch in feuchter und warmer Atmosphäre gewährleisten, sogar wenn in begrenztem Umfang Stärke in den Formteilen vorhanden ist. Als weiteres Positivum kommt hinzu, daß die Polymeren sich leicht durch Emulsionspolymerisation herstellen lassen. Eine biozide oder fungizide Ausrüstung der Formkörper ist entbehrlich, da die Polymeren unter den Bedingungen der Herstellung und der Verwendung der Platten nicht abgebaut werden. Trotzdem bereitet die Entsorgung von Bindemittelresten und auch der damit hergestellten Formkörper keine Probleme. Die Polymerisate bilden mit mehrwertigen Ionen wie z.B. Calciumionen, Magnesiumionen oder Fe(III)-ionen in Wasser unlösliche Verbindungen oder werden durch diese ausgefällt und können somit nicht ins Grundwasser gelangen. Die Calciumverbindungen adsorbieren sehr ausgeprägt an die Feststoffpartikel in Kläranlagen. Polymerisate, die nur aus Kohlenstoff, Wasserstoff und Sauerstoff aufgebaut sind, bieten in dieser Hinsicht besondere Vorteile.

In den folgenden Beispielen beziehen sich die Prozente und Teile auf das Gewicht, wenn nichts anderes angegeben ist.

Die Untersuchungen der beispielhaft hergestellten Platten wurden nach folgenden Methoden durchgeführt:

### Dichte der Mineralfaserplatten

Prüfkörper werden mit den Maßen 250 mm x 50 mm ausgeschnitten. Die Dicke wird mit einer Schieblehre bestimmt und zur Berechnung des Volumens verwendet. Die Dichte wird in g/cm³ als Mittelwert aus 2 Prüfkörpern berechnet.

### Dichte der Holzfaserplatten

Kreisrunde Prüfkörper mit D = 9 mm werden mittels Stanzeisen ausgestanzt. Die Dicke wird mit einer Schieblehre gemessen, zur Volumenberechnung eingesetzt, und die Dichte in g/cm³ als Mittelwert aus 3 Prüfkörpern berechnet.

### Wasseraufnahme

Prüfkörper mit den Längsmaßen 250 mm x 50 mm werden unter Gewichtsbelastung 1 bzw. 2 Stunden bei Raumtemperatur unter Wasser gelagert. Die Gewichtszunahme wird nach sorgfältigem Abtupfen durch Wägen als Mittelwert aus jeweils 2 Prüfkörpern in Prozent der Gewichtszunahme bestimmt.

### Formbeständigkeit (Maß für die Steifigkeit)

Man schleift mittels Bandschleifgerät Prüfkörper mit den Maßen 250 mm x 50 mm, bis diese 15 mm dick sind. Geschliffen wird auf der dem Sieb bei der Blattbildung abgewandten Seite.

Die so gewonnenen Prüfkörper werden in einem Klima von 38°C und 95 % relativer Luftfeuchte flachseitig nahe den Endkanten waagrecht aufgelegt und in der Mitte mit einem 1 kg-Gewicht belastet, so daß sich die Belastung auf die Gesamtlänge des Prüfkörpers auswirkt. Die Durchbiegung des Prüfkörpers wird im entlasteten Zustand gemessen und so ein Anhaltspunkt für das Langzeitverhalten von Mineralfaserplatten ermittelt.

### Festigkeit

Die getrockneten Prüfkörper (Maße 17 cm x 2 cm x 2 cm) werden nahe den Endkanten aufgelegt und in der Mitte mit einer kontinuierlich steigenden Kraft belastet, so daß sich die Belastung auf die Gesamtlänge des Prüfkörpers auswirkt. Die beim Bruch anliegende Kraft wird als Mittelwert von fünf Prüfkörpern in kg/cm² angegeben.

### Reißkraft

Die Reißkraft wird nach DIN 53 455 ermittelt.

Folgende Abkürzungen werden verwendet:
- AAEM: Acetylacetoxyethylmethacrylat
- AN: Acrylnitril
- AS: Acrylsäure
- EHA: 2-Ethylhexylacrylat
- MMA: Methylmethacrylat
- MA: Methylacrylat
- MAS: Methacrylsäure
- n-BA: n-Butylacrylat
- S: Styrol

Gemäß der folgenden allgemeinen Vorschrift wurden die in den Beispielen als Bindemittel verwendeten Polymerisatdispersionen B hergestellt:

Die Dispersionen wurden durch wäßrige radikalische Emulsionspolymerisation aus den Monomeren, die mit Hilfe der Emulgatoren in der Hälfte des Ansatzwassers emulgiert waren, unter Verwendung von 0,5 Gew.-%, bezogen auf die Monomeren, Natriumperoxodisulfat als Initiator in Form einer 2,5 gew.%igen wäßrigen Lösung bei 80°C hergestellt. Dazu wurde die Hälfte des Ansatzwassers vorgelegt und unter Rühren bei Polymerisationstemperatur 10 Gew.-% der Initiatorlösung zugegeben. Anschließend wurden die Monomeremulsion innerhalb von 2 Stunden und die Initiatorlösung innerhalb von 2,5 Stunden dem Polymerisationsgefäß unter Rühren kontinuierlich zugeführt. Zur Nachpolymerisation wurde noch 2 h bei Polymerisationstemperatur gerührt und dann in bekannter Weise aufgearbeitet. Die Menge des Ansatzwassers wurde so bemessen, daß die angegebenen Feststoffgehalte erzielt wurden.

Die bei den Beispielen 3, 4, 5, 7 bis 13 und V1 als Emulgatoren genannten Fettsäuresalze wurden in situ durch Neutralisation der korrespondierenden Carbonsäuren mit Natronlauge hergestellt. Durch Zugabe der Monomeren und gegebenenfalls Wasser bzw. der anderen Emulgatoren wurden die Monomeremulsionen hergestellt. Bei diesen Beispielen wurden weiterhin ein Drittel des Ansatzwassers vorgelegt und zwei Drittel für die Monomeremulsion verwendet. Ansonsten wurde wie oben beschrieben gearbeitet.

Die Glastemperaturen Tg wurden durch Differentialthermoanalyse (DTA) nach ASTM D 3418-82 ("midpoint temperature") bestimmt.

### Beispiel 1

Bindemittel: 42 %ige wäßrige Dispersion eines Polymerisates aus
92 Gew.% MMA
7 Gew.% AAEM
1 Gew.% MAS

| | |
|---|---|
| T_{g} | 97°C |
| Emulgator | 0,9 % Natriumlaurylsulfat bezogen auf Monomere |
| pH-Wert | 4,8 |

Man stellt unter schonendem Rühren eine Suspension aus
240 g Basaltwolle
90 g Kaolin
15 g Aluminiumhydroxid
57 g der o.g. Polymerdispersion
3 g einer handelsüblichen ca. 35 %igen Polysiloxandispersion als Hydrophobiermittel
in 6 l Prozeßwasser her. Hierzu benötigt man etwa 3 Minuten. Durch Zugabe von 4,5 g einer 10 %igen wäßrigen Lösung eines Polymerisates aus 70 Gew.% Acrylamid und 30 Gew.% Diethylaminoethylacrylat wird diese Suspension geflockt. Den so erhaltenen Faserbrei gießt man in einen Siebkasten mit einer Siebfläche von 25 cm x 25 cm und verteilt ihn gleichmäßig mit einem Holzspatel. Unter leichtem Unterdruck und vorsichtigem Pressen mit einem Stempel (25 cm x 25 cm, Druck höchstens 0,1 bar) wird die Faserbreischicht entwässert, wozu man höchstens 0,5 Minuten benötigt.

Man erhält eine etwa 18 mm dicke Rohplatte mit einer Restfeuchte von im Mittel 60 %. Die Rohplatte wird auf silikonisiertem Papier im Umlufttrockenschrank bei 180°C getrocknet, was etwa 2,5 h dauert.

### Eigenschaften der Mineralfaserplatte

| | | |
|---|---|---|
| Dichte | | 0,33 g/cm³ |
| Wasseraufnahme | nach 1 h | 5,5 % |
| | nach 2 h | 8,2 % |
| Formbeständigkeit | | weniger als 1 mm nach 290 h |

### Beispiel 2

Bindemittel: 46 %ige wäßrige Dispersion eines Polymerisats aus
88 Gew.% MMA
12 Gew.% AAEM

| | |
|---|---|
| T_{g} | 85°C |
| Emulgator | 1,3 % C₁₂-C₁₅-Natriumalkylsulfonat bezogen auf Monomere |
| pH-Wert | 5,5 |

### Arbeitsweise gemäß Beispiel 1

Eingesetzt:
250 g Basaltwolle
100 g Kaolin
38 g o.g. Polymerdispersion
8 g Maisstärke
Flockungs- und Hydrophobierungsmittel gemäß Beispiel 1.

### Eigenschaften

| | | |
|---|---|---|
| Dichte | | 0,31 g/cm³ |
| Wasseraufnahme | nach 1 h | 6,0 % |
| | nach 2 h | 7,9 % |
| Formbeständigkeit | | 1 mm nach 288 h |

### Beispiel 3

Bindemittel: 48 %ige wäßrige Dispersion eines Polymerisats aus
60 Gew.% MMA
25 Gew.% AN
10 Gew.% AAEM
5 Gew.% MA

| | |
|---|---|
| T_{g} | 79°C |
| Emulgator | 1,7 % Natriumoleat bezogen auf Monomere |
| pH-Wert | 8,1 |

Eingesetzt:
235 g Schlackenwolle
80 g Kaolin
10 g Aluminiumhydroxid
37 g o.g. Polymerdispersion
Arbeitsweise, Flockungs- und Hydrophobierungsmittel gemäß Beispiel 1.

### Eigenschaften

| | | |
|---|---|---|
| Dichte | | 0,30 g/cm³ |
| Wasseraufnahme | nach 1 h | 4,9 % |
| | nach 2 h | 7,9 % |
| Formbeständigkeit | | 1 mm nach 280 h |

### Beispiel 4

Bindemittel: 43 %ige wäßrige Dispersion eines Polymerisats aus
73 Gew.% S
15 Gew.% n-BA
12 Gew.% AAEM

| | |
|---|---|
| T_{g} | 79°C |
| Emulgator | 3,2 % Natriumoleat bezogen auf Monomere |
| pH-Wert | 7,8 |

Eingesetzt:
240 g Schlackenwolle
95 g Kaolin
15 g Aluminiumhydroxid
6,3 g Kartoffelstärke
36 g o.g. Polymerdispersion
Arbeitsweise, Flockungs- und Hydrophobierungsmittel gemäß Beispiel 1.

### Eigenschaften

| | | |
|---|---|---|
| Dichte | | 0,29 g/cm³ |
| Wasseraufnahme | nach 1 h | 4,3 % |
| | nach 2 h | 5,8 % |
| Formbeständigkeit | | weniger als 1 mm nach 291 h |

### Beispiel 5

Bindemittel: 45,8 %ige wäßrige Dispersion eines Polymerisats aus
60 Gew.% S
20 Gew.% AN
12 Gew.% n-BA
8 Gew.% AAEM

| | |
|---|---|
| T_{g} | 89°C |
| Emulgator | 3,5 % Natriumoleat bezogen auf Monomere |
| pH-Wert | 8,5 |

Eingesetzt:
220 g Schlackenwolle
120 g Kaolin
10 g Aluminiumhydroxid
7,5 g Maisstärke
27 g o.g. Polymerdispersion
Arbeitsweise, Flockungs- und Hydrophobierungsmittel gemäß Beispiel 1.

### Eigenschaften

| | | |
|---|---|---|
| Dichte | | 0,33 g/cm³ |
| Wasseraufnahme | nach 1 h | 5,8 % |
| | nach 2 h | 7,1 % |
| Formbeständigkeit | | weniger als 1 mm nach 266 h |

### Beispiel 6

Bindemittel: 39 %ige wäßrige Dispersion eines Polymerisats aus
78 Gew.% MMA
16 Gew.% MA
6 Gew.% Cyanoacetoxyethylmethacrylat

| | |
|---|---|
| T_{g} | 75°C |
| Emulgator | 0,9 % C₁₂-C₁₅-Natriumalkylsulfonat bezogen auf Monomere |
| pH-Wert | 5,1 |

Eingesetzt:
235 g Schlackenwolle
80 g Kaolin
12 g Aluminiumhydroxid
2,5 g Maisstärke
50 g o.g. Polymerdispersion
Arbeitsweise, Flockungs- und Hydrophobierungsmittel gemäß Beispiel 1.

### Eigenschaften

| | | |
|---|---|---|
| Dichte | | 0,28 g/cm³ |
| Wasseraufnahme | nach 1 h | 6,0 % |
| | nach 2 h | 8,4 % |
| Formbeständigkeit | | 2 mm nach 266 h |

### Vergleichsbeispiel 1

Bindemittel: 50,8 %ige wäßrige Dispersion eines Polymerisats aus
65 Gew.% MMA
30 Gew.% AN
5 Gew.% MA

| | |
|---|---|
| T_{g} | 81°C |
| Emulgator | 1,85 % Natriumlaurat bezogen auf Monomere |
| pH-Wert | 6,7 |

Eingesetzt:
235 g Schlackenwolle
80 g Kaolin
10 g Aluminiumhydroxid
35 g o.g. Polymerdispersion
Arbeitsweise, Flockungs- und Hydrophobierungsmittel gemäß Beispiel 1.

### Eigenschaften

| | | |
|---|---|---|
| Dichte | | 0,32 g/cm³ |
| Wasseraufnahme | nach 1 h | 13,7 % |
| | nach 2 h | 25,1 % |
| Formbeständigkeit | | 3 mm nach 268 h |

### Beispiel 7

Man stellt unter gutem Rühren eine Suspension von Fasern in 6 l Wasser her. Hierzu benötigt man etwa 3 Minuten. Bei Bedarf setzt man nun Hydrophobierungsmittel zu. Der nächste Schritt ist die Zugabe der wäßrigen Bindemitteldispersion, gegebenenfalls gefolgt von Aluminiumsulfat. Ebenfalls unter Rühren erfolgt der Zusatz 4,5 g einer 10 %igen wäßrigen Lösung eines Polymerisats auf 70 Gew.% Acrylamid und 30 Gew.% Diethylaminoethylacrylat als Flockungsmittel.

Zur Blattbildung gießt man den Faserbrei in einen Siebkasten mit der Siebfläche von 25 cm x 25 cm und verteilt die Masse gleichmäßig mit einem Holzspatel. Unter leichtem Unterdruck wird nun die Masse entwässert. Unter leichtem Pressen (weniger als 0,1 bar) mit einem Stempel (25 cm x 25 cm) und vorsichtigem Absaugen erhält man feuchte Rohplatten, die meist 8 bis 9 mm dick sind und ca. 60 % Wasser enthalten.

Die Rohplatten trocknet man in einem Mikrowellenherd auf Restfeuchten von 10 bis 15 % und anschließend in einer bereizten Presse bei 220°C und 50 kp/cm² während 90 s.

Bindemittel: 45 %ige wäßrige Dispersion eines Polymerisats aus
62 Gew.% MMA
20 Gew.% AN
10 Gew.% MA
8 Gew.% AAEM

| | |
|---|---|
| T_{g} | 82°C |
| Emulgator | 2,1 % Natriumlaurat bezogen auf Monomere |
| pH-Wert | 8,5 |

Eingesetzt:
105 g Holzfasern
10 g Cellulosefasern
10 g Polypropylenfasern
15 g 8 %ige wäßrige Emulsion von Stearyldiketen (Hydrophobierungsmittel)
18 g o.g. Polymerdispersion
11 g wäßrige 10 %ige Aluminiumsulfatlösung
4,5 g Flockungsmittel

### Eigenschaften

| | | |
|---|---|---|
| Dichte | | 0,85 g/cm³ |
| Wasseraufnahme | nach 1 h | 6,5 % |
| | nach 2 h | 8,0 % |
| Reißkraft | | 12 N/mm² |

### Beispiel 8

Bindemittel: 41 %ige wäßrige Dispersion eines Polymerisats aus
75 Gew.% S
15 Gew.% n-BA
10 Gew.% AAEM

| | |
|---|---|
| T_{g} | 80°C |
| Emulgator | 4,0 % Natriumoleat bezogen auf Monomere |
| pH-Wert | 8,0 |

Eingesetzt:
6 l Prozeßwasser
100 g Holzfasern
10 g Cellulosefasern
10 g Polypropylenfasern
24 g o.g. Polymerdispersion 4,5 g Flockungsmittel wie in Beispiel 7

### Eigenschaften

| | | |
|---|---|---|
| Dichte | | 0,87 g/cm³ |
| Wasseraufnahme | nach 1 h | 5,0 % |
| | nach 2 h | 7,5 % |
| Reißkraft | | 14 N/mm² |

### Beispiel 9

Bindemittel: 46,5 %ige wäßrige Dispersion eines Polymerisats aus
91 Gew.% MMA
9 Gew.% AAEM

| | |
|---|---|
| T_{g} | 91°C |
| Emulgator | 2,8 % Natriumlaurat bezogen auf Monomere |
| pH-Wert | 7,5 |

Eingesetzt:
6 l Prozeßwasser
90 g Holzfasern
10 g Cellulosefasern
20 g Polypropylenfasern
19 g o.g. Polymerdispersion
3 g wäßrige Aluminiumsulfatlösung 10 %ig
4,5 g Flockungsmittel wie in Beispiel 7

### Eigenschaften

| | | |
|---|---|---|
| Dichte | | 0,76 g/cm³ |
| Wasseraufnahme | nach 1 h | 4,5 % |
| | nach 2 h | 6,0 % |
| Reißkraft | | 12 N/mm² |

### Beispiel 10

Bindemittel: 38 %ige wäßrige Dispersion eines Polymerisats aus
82 Gew.% S
10 Gew.% MA
7 Gew.% Acetylacetoxy-n-butylacrylat
1 Gew.% AS

| | |
|---|---|
| T_{g} | 95°C |
| Emulgator | 2,7 % Natriumlaurat bezogen auf Monomere |
| pH-Wert | 8,3 |

Eingesetzt:
6 l Prozeßwaser
100 g Holzfasern
5 g Cellulosefasern
15 g Polyacrylnitrilfasern
24 g o.g. Polymerdispersion
4,5 g Flockungsmittel wie in Beispiel 7

### Eigenschaften

| | | |
|---|---|---|
| Dichte | | 0,91 g/cm³ |
| Wasseraufnahme | nach 1 h | 6,0 % |
| | nach 2 h | 7,2 % |
| Reißkraft | | 14,5 N/mm² |

### Beispiel 11

Bindemittel: 42,5 %ige wäßrige Dispersion eines Polymerisats aus
80 Gew.% S
10 Gew.% EHA
5 Gew.% 1,1-Dibenzoyl-2-acrylamidoethan
5 Gew.% AS

| | |
|---|---|
| T_{g} | 88°C |
| Emulgator | 0,25 % Natriumlaurylsulfat und |
| | 2,7 % Natriumoleat, jeweils bezogen auf Monomere |
| pH-Wert | 8,1 |

Eingesetzt:
6 l Prozeßwasser
100 g Holzfasern
10 g Polyacrylnitrilfasern
10 g Polypropylenfasern
25 g o.g. Polymerdispersion
4,5 g Flockungsmittel wie in Beispiel 7

### Eigenschaften

| | | |
|---|---|---|
| Dichte | | 0,95 g/cm³ |
| Wasseraufnahme | nach 1 h | 4,0 % |
| | nach 2 h | 5,8 % |
| Reißkraft | | 13 N/mm² |

### Beispiel 12

Bindemittel: 44 %ige wäßrige Dispersion eines Polymerisats aus
79 Gew.% S
5 Gew.% AN
10 Gew.% EHA
5 Gew.% 1-Benzoyl-1-acetyl-2-acrylamidoethan
1 Gew.% AS

| | |
|---|---|
| T_{g} | 80°C |
| Emulgator | 1 % Natriumoleat und |
| | 0,5 % Natriumlaurat, jeweils bezogen auf Monomere |
| pH-Wert | 7,9 |

Eingesetzt:
6 l Prozeßwasser
95 g Holzfasern
5 g Cellulosefasern
10 g Polyacrylnitrilfasern
10 g Polypropylenfasern
26 g o.g. Polymerdispersion
4,5 g Flockungsmittel wie in Beispiel 7

### Eigenschaften

| | | |
|---|---|---|
| Dichte | | 0,83 g/cm³ |
| Wasseraufnahme | nach 1 h | 5,6 % |
| | nach 2 h | 7,0 % |
| Reißkraft | | 12 N/mm² |

### Beispiel 13

Bindemittel: 49,3 %ige wäßrige Dispersion eines Polymerisats aus
90 Gew.% MMA
5 Gew.% AAEM
5 Gew.% AS

| | |
|---|---|
| T_{g} | 102°C |
| Emulgator | 2,1 % Natriumoleat bez. auf Monomere |
| pH-Wert | 7,5 |

Eingesetzt:
6 l Prozeßwasser
100 g Holzfasern
10 g Polyacrylnitrilfasern
10 g Polypropylenfasern
21 g o.g. Polymerdispersion
4,5 g Flockungsmittel wie in Beispiel 7

### Eigenschaften

| | | |
|---|---|---|
| Dichte | | 0,85 g/cm³ |
| Wasseraufnahme | nach 1 h | 4,0 % |
| | nach 2 h | 6,9 % |
| Reißkraft | | 15 N/mm² |

### Vergleichsbeispiel 2

Bindemittel: 40 %ige wäßrige Dispersion eines Polymerisats aus
60 Gew.% MMA
30 Gew.% n-BA
10 Gew.% MAS

| | |
|---|---|
| T_{g} | 78°C |
| Emulgator | 1,35 % Natriumlaurylsulfat bezogen auf Monomere |
| pH-Wert | 7,3 |

Eingesetzt:
86 g Holzfasern
10 g Cellulosefasern
24 g Polypropylenfasern
24 g wäßrige Stearyldiketen-Emulsion 8 %ig
24 g o.g. Polymerdisperion
25 g wäßrige Aluminiumsulfatlösung 10 %ig
4,5 g Flockungsmittel wie in Beispiel 7

### Eigenschaften

| | | |
|---|---|---|
| Dichte | | 0,80 g/cm³ |
| Wasseraufnahme | nach 1 h | 11,0 % |
| | nach 2 h | 15,0 % |
| Reißkraft | | 8 N/mm² |

### Vergleichsbeispiel 3

Bindemittel: 30,2 %ige wäßrige Dispersion eines Polymerisats aus
70 Gew.% MMA
30 Gew.% MAS

| | |
|---|---|
| T_{g} | 128°C |
| Emulgator | 1,2 % Natriumlaurylsulfat bezogen auf Monomere |
| pH-Wert | 4,0 |

Eingesetzt:
86 g Holzfasern
10 g Cellulosefasern
24 g Polypropylenfasern
24 g wäßrige Stearyldiketen-Emulsion 8 %ig
24 g o.g. Polymerdisperion
25 g wäßrige Aluminiumsulfatlösung 10 %ig
4,5 g Flockungsmittel wie in Beispiel 7

### Eigenschaften

| | | |
|---|---|---|
| Dichte | | 0,81 g/cm³ |
| Wasseraufnahme | nach 1 h | 10,0 % |
| | nach 2 h | 16,0 % |
| Reißkraft | | 7 N/mm² |

### Vergleichsbeispiel 4

Bindemittel: 29,2 %ige wäßrige Dispersion eines Polymerisats aus
60 Gew.% MMA
35 Gew.% n-BA
5 Gew.% AAEM

| | |
|---|---|
| T_{g} | 61°C |
| Emulgator | 1,4 % Na-Salz eines Fettalkoholethoxilat-Schwefelsäurehalbesters (EO-Grad: 2) |
| pH-Wert | 2,9 |

### Arbeitsweise gemäß Beispiel 1

Eingesetzt:
250 g Basaltwolle
100 g Kaolin
60 g o.g. Polymerdispersion

### Eigenschaften

| | | |
|---|---|---|
| Dichte | | 0,28 g/cm³ |
| Wasseraufnahme | nach 1 h | 49,0 % |
| | nach 2 h | 58,9 % |
| Formbeständigkeit | | Bruch nach 190 h. |

### Vergleichsbeispiel 5

Bindemittel: Wie in Vergleichsbeispiel 4

### Arbeitsweise gemäß Beispiel 7

Eingesetzt:
105 g Holzfasern
10 g Cellulosefasern
10 g Polypropylenfasern
15 g 8 %ige wäßrige Emulsion von Stearyldiketen (Hydrophobierungsmittel)
29 g o.g. Polymerdisperion
11 g wäßrige 10 %ige Aluminiumsulfatlösung
4,5 g Flockungsmittel

### Eigenschaften

| | | |
|---|---|---|
| Dichte | | 0,69 g/cm³ |
| Wasseraufnahme | nach 1 h | 41,8 % |
| | nach 2 h | 56,6 % |
| Reißkraft | | 0,2 N/mm² |

## Patentansprüche (Patentansprüche für folgende(n) Vertragsstaat(en): AT, BE, CH, DE, DK, FR, GB, IT, LI, NL, SE)

1. Formkörper auf Basis von Fasern (Komponente A), ausgenommen Textilmaterialien, enthältend
B) 5 bis 25 Gew.%, bezogen auf A, eines Polymerisates aus
b₁) 75 bis 99,9 Gew.%, bezogen auf B, vinylaromatischen Monomeren, Methylmethacrylat, Methylacrylat, Acrylnitril, Methacrylnitril, Vinylhalogenid, Acrylestern und Methacrylestern von 2 bis 12 C-Atome enthaltenden Alkoholen und/oder Vinylestern mit bis zu 20 C-Atomen, wobei die Summe der Acryl- und Methacrylester von 2 bis 12 C-Atome enthaltenden Alkoholen und der Vinylester bis zu 20 Gew.-%, bezogen auf B, betragen kann ,
b₂) 0,1 bis 25 Gew.%, bezogen auf B, wenigstens eines Monomeren der allgemeinen Formel I 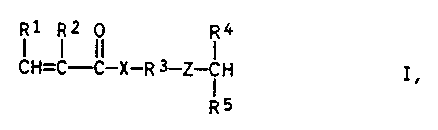 in der
R¹ und R² -H oder C₁-C₄-Alkyl,
R³ ein Brückenglied mit 1 bis 20 C-Atomen,
R⁴ -C(O)R⁶, -C(O)OR⁶ oder -CN
R⁵ -H, -C(O)R⁹, -C(O)OR⁹ oder -CN
X -O- oder -NR⁷-,
Z eine einfache Bindung, -CH₂-, -O-, -NR⁸- oder -O-C(O)- und
R⁶,R⁷,R⁸ und R⁹ H, Alkyl, Aryl, Alkaryl oder Aralkyl mit bis zu 12 C-Atomen sind,
und
b₃) 0 bis 10 Gew.%, bezogen auf B, weiteren copolymerisierbaren Monomeren, ausgenommen Itaconsäure.

2. Formkörper nach Anspruch 1 in Form einer Platte.

3. Formkörper nach Anspruch 1 oder 2, dadurch gekennzeichnet, daß man als Komponente A Mineralfasern einsetzt.

4. Formkörper nach Anspruch 1 oder 2, dadurch gekennzeichnet, daß man als Komponente A organische Fasern einsetzt.

5. Verfahren zur Herstellung von Formkörpern nach den Ansprüchen 1 bis 4, dadurch gekennzeichnet, daß man eine wäßrige, die Fasern A enthaltende Suspension unter Verwendung einer wäßrigen Dispersion von B herstellt, diese Suspension anschließend ausflockt, den entstandenen Faserbrei formt und trocknet.

## Patentansprüche (Patentansprüche für folgende(n) Vertragsstaat(en): ES)

1. Verfahren zur Herstellung von Formkörpern, ausgenommen Textilmaterialien, dadurch gekennzeichnet, daß man eine wäßrige, Fasern A enthaltende Suspension unter Verwendung einer wäßrigen Dispersion eines Polymerisats B herstellt, diese Suspension anschließend ausflockt und den entstandenen Faserbrei formt und trocknet, wobei die Menge von B, bezogen auf A, 5 bis 25 Gew.% beträgt und B in polymerisierter Form aus
b₁) 75 bis 99,9 Gew.%, bezogen auf B, vinylaromatischen Monomeren, Methylmethacrylat, Methylacrylat, Acrylnitril, Methacrylnitril, Vinylhalogenid, Acrylestern und Methacrylestern von 2 bis 12 C-Atome enthaltenden Alkoholen und/oder Vinylestern mit bis zu 20 C-Atomen, wobei die Summe der Acryl- und Methacrylester von 2 bis 12 C-Atome enthaltenden Alkoholen und der Vinylester bis zu 20 Gew.-%, bezogen auf B, betragen kann,
b₂) 0,1 bis 25 Gew.%, bezogen auf B, wenigstens eines Monomeren der allgemeinen Formel I 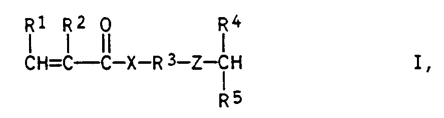 in der
R¹ und R² -H oder C₁-C₄-Alkyl,
R³ ein Brückenglied mit 1 bis 20 C-Atomen,
R⁴ -C(O)R⁶, -C(O)OR⁶ oder -CN
R⁵ -H, -C(O)R⁹, -C(O)OR⁹ oder -CN
X -O- oder -NR⁷-,
Z eine einfache Bindung, -CH₂-, -O-, -NR⁸- oder -O-C(O)- und
R⁶,R⁷,R⁸ und R⁹ H, Alkyl, Aryl, Alkaryl oder Aralkyl mit bis zu 12 C-Atomen sind,
und
b₃) 0 bis 10 Gew.%, bezogen auf B, weiteren copolymerisierbaren Monomeren, ausgenommen Itaconsäure,
aufgebaut ist.

2. Verfahren nach Anspruch 1, dadurch gekennzeichnet, daß der entstandene Faserbrei zu einer Platte geformt wird.

3. Verfahren nach Anspruch 1 oder 2, dadurch gekennzeichnet, daß man als Komponente A Mineralfasern einsetzt.

4. Verfahren nach Anspruch 1 oder 2, dadurch gekennzeichnet, daß man als Komponente A organische Fasern einsetzt.

## Claims (Claims for the following Contracting State(s): AT, BE, CH, DE, DK, FR, GB, IT, LI, NL, SE)

1. A molding based on fibers (component A), excluding textile materials, containing
B) from 5 to 25% by weight, based on A, of a polymer of
b₁) from 75 to 99.9% by weight, based on B, of vinylaromatic monomers, methyl methacrylate, methyl acrylate, acrylonitrile, methacrylonitrile, vinyl halide, acrylates and methacrylates of alcohols of 2 to 12 carbon atoms and/or vinyl esters of not more than 20 carbon atoms, where the sum of the acrylates and methacrylates of alcohols of 2 to 12 carbon atoms and of the vinyl esters may be not more than 20% by weight, based on B,
b₂) from 0.1 to 25% by weight, based on B, of one or more monomers of the formula I 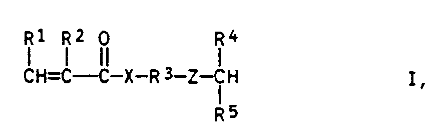 where R¹ and R² are each -H or C₁-C₄-alkyl, R³ is a bridge member of 1 to 20 carbon atoms, R⁴ is -C(O)R⁶, -C(O)OR⁶ or -CN, R⁵ is -H, -C(O)R⁹, -C(O)OR⁹ or -CN, X is -O- or -NR⁷-, Z is a single bond, -CH₂-, -O-, -NR⁸- or -O-C(O)- and R⁶, R⁷, R⁸ and R⁹ are each H, alkyl, aryl, alkaryl or aralkyl of not more than 12 carbon atoms,
and
b₃) from 0 to 10% by weight, based on B, of further copolymerizable monomers, excluding itaconic acid.

2. A molding as claimed in claim 1 in the form of a board.

3. A molding as claimed in claim 1 or 2, wherein mineral fibers are used as component A.

4. A molding as claimed in claim 1 or 2, wherein organic fibers are used as component A.

5. A process for the production of moldings as claimed in any of claims 1 to 4, wherein an aqueous suspension containing the fibers A is prepared using an aqueous dispersion of B, this suspension is then flocculated, the resulting fiber slurry is molded and the molding is dried.

## Claims (Claims for the following Contracting State(s): ES)

1. A process for the production of moldings, excluding textile materials, wherein an aqueous suspension containing fibers A is prepared using an aqueous dispersion of a polymer B, this suspension is then flocculated and the resulting fiber slurry is molded and the molding is dried, the amount of B being from 5 to 25% by weight, based on A, and B in polymerized form being composed of
b₁) from 75 to 99.9% by weight, based on B, of vinylaromatic monomers, methyl methacrylate, methyl acrylate, acrylonitrile, methacrylonitrile, vinyl halide, acrylates and methacrylates of alcohols of 2 to 12 carbon atoms and/or vinyl esters of not more than 20 carbon atoms, where the sum of the acrylates and methacrylates of alcohols of 2 to 12 carbon atoms and of the vinyl esters may be not more than 20% by weight, based on B,
b₂) from 0.1 to 25% by weight, based on B, of one or more monomers of the formula I 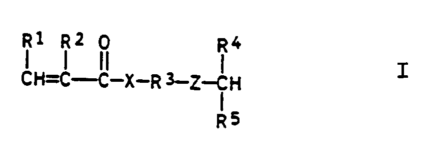 where R¹ and R² are each -H or C₁-C₄-alkyl, R³ is a bridge member of 1 to 20 carbon atoms, R⁴ is -C(O)R⁶, -C(O)OR⁶ or -CN, R⁵ is -H, -C(O)R⁹, -C(O)OR⁹ or -CN, X is -O- or -NR⁷-, Z is a single bond, -CH₂-, -O-, -NR⁸- or -O-C(O)- and R⁶, R⁷, R⁸ and R⁹ are each H, alkyl, aryl, alkaryl or aralkyl of not more than 12 carbon atoms,
and
b₃) from 0 to 10% by weight, based on B, of further copolymerizable monomers, excluding itaconic acid.

2. A process as claimed in claim 1, wherein the resulting fiber slurry is molded into a board.

3. A process as claimed in claim 1 or 2, wherein mineral fibers are used as component A.

4. A process as claimed in claim 1 or 2, wherein organic fibers are used as component A.

## Revendications (Revendications pour l'(les) Etat(s) contractant(s) suivant(s): AT, BE, CH, DE, DK, FR, GB, IT, LI, NL, SE)

1. Corps ou articles moulés à base de fibres (composant A), à l'exclusion de matières textiles, contenant
B) 5 à 25% en poids, par rapport à A, d'un polymère constitué de
b₁) 75 à 99,9% en poids, par rapport à B, de monomères vinylaromatiques, de méthacrylate de méthyle, d'acrylate de méthyle, d'acrylonitrile, de méthacrylonitrile, d'halogénure de vinyle, d'esters acryliques et d'esters méthacryliques d'alcools comportant de 2 à 12 atomes de carbone et/ou d'esters vinyliques comportant jusqu'à 20 atomes de carbone, où la somme des esters acryliques et méthacryliques d'alcools contenant de 2 à 12 atomes de carbone et des esters vinyliques peut atteindre jusqu'à 20% en poids, par rapport a B,
b₂) 0,1 à 25% en poids, par rapport à B, d'au moins un monomère de la formule générale I 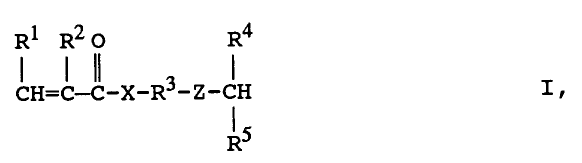 dans laquelle
R¹ et R² représentent chacun un atome d'hydrogène ou un radical alkyle en C₁ à C₄,
R³ représente un élément de pontage comportant de 1 à 20 atomes de carbone,
R⁴ représente -C(O)R⁶, -C(O)OR⁶ ou -CN,
R⁵ représente -H, -C(O)R⁹, -C(O)OR⁹ ou -CN,
X représente -O- ou -NR⁷-,
Z représente une simple liaison, -CH₂- -O-, -NR⁸- ou -O-C(O)- et
R⁶, R⁷, R⁸ et R⁹ représentent un atome d'hydrogène, un radical alkyle, aryle, alcaryle ou aralkyle comportant jusqu'à 12 atomes de carbone,
et
b₃) 0 à 10% en poids, par rapport à B, d'autres monomères copolymérisables, à l'exception de l'acide itaconique.

2. Corps ou articles moulés suivant la revendication 1, sous la forme d'une plaque.

3. Corps ou articles moulés suivant la revendication 1 ou 2, caractérisés en ce que l'on utilise des fibres minérales à titre de composant A.

4. Corps ou articles moulés suivant la revendication 1 ou 2, caractérisés en ce que l'on utilise des fibres organiques à titre de composant A.

5. Procédé de fabrication de corps ou d'articles moulés suivant les revendications 1 à 4, caractérisé en ce que l'on prépare une suspension aqueuse contenant les fibres A en recourant à l'emploi d'une dispersion aqueuse de B, on flocule ensuite la suspension et on moule la bouillie de fibres formée et on la sèche.

## Revendications (Revendications pour l'(les) Etat(s) contractant(s) suivant(s): ES)

1. Procédé de fabrication de corps ou articles moulés, à l'exclusion de matières textiles, caractérisé en ce que l'on prépare une suspension aqueuse, contenant des fibres A, en recourant à l'emploi d'une dispersion aqueuse d'un polymère B, on flocule ensuite la suspension et on moule la bouillie de fibres formée et on la sèche, où la quantité de B, par rapport à A, varie de 5 à 25% en poids et B, sous forme polymérisée, est constitué de
b₁) 75 à 99,9% en poids, par rapport à B, de monomères vinylaromatiques, de méthacrylate de méthyle, d'acrylate de méthyle, d'acrylonitrile, de méthacrylonitrile, d'halogénure de vinyle, d'esters acryliques et d'esters méthacryliques d'alcools comportant de 2 à 12 atomes de carbone et/ou d'esters vinyliques comportant jusqu'à 20 atomes de carbone, où la somme des esters acryliques et méthacryliques d'alcools contenant de 2 à 12 atomes de carbone et des esters vinyliques peut atteindre jusqu'à 20% en poids, par rapport a B,
b₂) 0,1 à 25% en poids, par rapport à B, d'au moins un monomère de la formule générale I 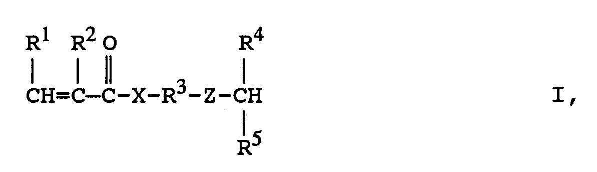 dans laquelle
R¹ et R² représentent chacun un atome d'hydrogène ou un radical alkyle en C₁ à C₄,
R³ représente un élément de pontage comportant de 1 à 20 atomes de carbone,
R⁴ représente -C(O)R⁶, -C(O)OR⁶ ou -CN,
R⁵ représente -H, -C(O)R⁹, -C(O)OR⁹ ou -CN,
X représente -O- ou -NR⁷-,
Z représente une simple liaison, -CH₂-, -O- -NR⁸- ou -O-C(O)- et
R⁶, R⁷, R⁸ et R⁹ représentent un atome d'hydrogène, un radical alkyle, aryle, alcaryle ou aralkyle comportant jusqu'à 12 atomes de carbone,
et
b₃) 0 à 10% en poids, par rapport à B, d'autres monomères copolymérisables, à l'exception de l'acide itaconique.

2. Procédé suivant la revendication 1, caractérisé en ce que l'on moule la bouillie de fibres formée en une plaque.

3. Procédé suivant la revendication 1 ou 2, caractérisé en ce que l'on utilise des fibres minérales à titre de composant A.

4. Procédé suivant la revendication 1 ou 2, caractérisé en ce que l'on utilise des fibres organiques à titre de composant A.
